# EUROPEAN PATENT APPLICATION

(11) **EP 2 590 425 A1**
(43) Date of publication of application: **08.05.2013**
(21) Application number: 12190942.8
(22) Date of filing: 01.11.2012
(51) Int. Cl.: H04N 21/434, H04N 21/61, H04N 21/462, H04N 21/858

(54) **An apparatus for receiving a broadcast stream including an online service in a channel list and a method thereof**

(30) Priority: 03.11.2011 US 201161555154 P; 29.02.2012 GB 201203524; 23.08.2012 KR 20120092606
(71) Applicant: Samsung Electronics Co., Ltd., Gyeonggi-do 443-742 (KR)
(72) Inventor: Durn, Leslie, Middlesex, TW18 4QE (GB)
(74) Representative: Robinson, Ian Michael

(57) **Abstract**

Provided are an apparatus and method for generating a combined channel list including broadcast services and one or more online services. The apparatus includes: a broadcast receiver which receives a broadcast stream comprising a plurality of broadcast services, and a plurality of logical channel numbers (LCNs) for the plurality of broadcast services; a network communicator which communicates with a network; and a processor which generates a channel list, wherein the broadcast receiver receives information indicating a network location through the received broadcast stream, the network communicator connects to the indicated network location to receive online service information including an LCN of an online service receivable by the network communicator, and the processor generates the channel list based on the plurality of LCNs of the plurality of broadcast services and the LCN of the online service.

## Description

### CROSS-REFERENCE TO RELATED APPLICATIONS

This application claims priority from Korean Patent Application No. 10-2012-0092606, filed on August 23, 2012 in the Korean Intellectual Property Office, and Great Britain Application No. GB1203524.2, filed on November 3, 2011 in the Intellectual Property Office of the United Kingdom, and claims the benefit of U.S. Provisional Application No. 61/555154, filed on February 29, 2012.

### BACKGROUND

### 1. Field

Apparatuses and methods consistent with exemplary embodiments relate to including an online service in a channel list, and more particularly, to generating a channel list including an online service receivable from a network and broadcast services receivable through a broadcast stream.

### 2. Description of the Related Art

In a related art television broadcasting system, for example, a Digital Video Broadcasting (DVB) system, terrestrial television services are provided through inclusion of a broadcast service in one or more digital multiplexes, which may be referred to as broadcast streams, transmitted by one or more transmitters. A receiver receives these multiplexes, which contain all the information used to form a channel list displaying the services. A user can view the channel list and select a particular service to be displayed. Recently, receivers have been introduced that can obtain online services over a network connection, in addition to the broadcast services received via the digital multiplex. However, no service discovery mechanism exists for online services. Therefore, to select an online service, the user has to navigate to a specific menu to view the services that are available online, as the online services cannot be included in the normal channel list.

### SUMMARY

According to the present invention there is provided an apparatus and method as set forth in the appended claims. Other features of the invention will be apparent from the dependent claims, and the description which follows.

According to an aspect of an exemplary embodiment, there is provided apparatus including: a broadcast receiver arranged to receive a broadcast stream including a plurality of broadcast services, the broadcast stream further including a logical channel number (LCN) for each one of the broadcast services; a network communicator which communicates with a network; a processor which generates a channel list, wherein the apparatus is arranged to receive information defining a network location through the broadcast stream, and the processor controls the network communicator to connect to the network location to receive online service information including an LCN of an online service receivable by the network communicator, and generate a channel list based on the LCNs of the plurality of broadcast services and the LCN of the online service. The online service information can enable the apparatus to include the online service in the channel list along with the broadcast services.

The online service information may include a source identifier for identifying a source from which the online service can be received, the apparatus being arranged to respond to a command selecting the online service from the channel list by connecting to the source to receive the online service.

The online service information may further include an alternative LCN for the online service, and the apparatus may be arranged to include the online service in the list at a position corresponding to the alternative LCN if another service is already using the LCN of the online service, the another service being another online service or one of the broadcast services.

If the online service information identifies a plurality of online services receivable having the same LCN, the apparatus may be arranged to select one of the plurality of online services to be included in the list at a position corresponding to that LCN based on a user selection.

The online service information may include online service identification information for identifying the online service, and the apparatus may be arranged to receive broadcast service identification information through the broadcast stream for identifying each of the plurality of broadcast services, and to compare the online service identification information to the broadcast service identification information and determine that the online service is also available as one of the broadcast services through the broadcast stream if a match is found.

The apparatus may be a digital video broadcasting (DVB) receiver and the online service identification information and broadcast service identification information may include DVB triplet information, the DVB triplet information including a transport stream identifier (TSID), an original network identifier (ONID), and a service identifier SID.

The online service information may include preferred source information indicating which one of the broadcast stream and the network is the preferred source for the online service, and if it is determined that the online service is also available in the broadcast stream and if the preferred source information indicates that the network is the preferred source, the apparatus may be arranged to include the online service in the channel list at a position corresponding to the LCN assigned to the same service receivable through the broadcast stream.

The apparatus may be further arranged to include the same service receivable through the broadcast stream at a position corresponding to an unused LCN in the channel list. Alternatively, the apparatus may be arranged to not include the same service receivable through the broadcast stream in the channel list.

If it is determined that the online service is also available in the broadcast stream, the apparatus may be arranged to combine content from the online service received through the network connection with content from the same service received through the broadcast stream, and present the combined content to a user.

The online service information may include a second source identifier for identifying a source from which an application related to the online service can be received by the network communicator.

The apparatus may be arranged to determine whether the online service information includes the LCN of the online service, assign one of a plurality of unused LCNs to the online service if the LCN is not included in the online service information, and generate the channel list based on the LCN assigned to the online service. Therefore online services can still be included in the channel list even if an LCN for the service is not provided in the online service information.

The apparatus may be a digital video broadcasting DVB receiver and may be arranged to identify the network location based on information included in a network information table NIT received through the broadcast stream.

According to an aspect of another exemplary embodiment, there is provided an apparatus including: a broadcast receiver arranged to receive a broadcast stream including a plurality of broadcast services, the broadcast stream further including a logical channel number (LCN) for each one of the broadcast services; a network communicator which communicates with a network; and a processor which generates a channel list, wherein the apparatus is arranged to receive information defining a network location through the broadcast stream, and control the network communicator to connect to the network location to receive online service information identifying an online service receivable by the network communication module, wherein if the online service information includes an LCN of the online service, the processor generates a channel list based on the LCNs of the plurality of broadcast services and the received LCN of the online service, and wherein if the online service information does not include an LCN of the online service, the processor assigns one of a plurality of unused LCNs to the online service and generates the channel list based on the LCNs of the plurality of broadcast services and the LCN assigned to the online service.

According to an aspect of another exemplary embodiment, there is provided a method to receive a broadcast stream including a plurality of broadcast services and a logical channel number (LCN) for each one of the broadcast services, and further arranged to receive an online service through a network communication module, the method including: receiving information defining a network location through the broadcast stream; connecting to the network location to receive online service information including an LCN of the online service; and generating a channel list based on the LCNs of the plurality of broadcast services and the LCN of the online service.

The method may further include identifying a source from which the online service can be received, based on a source identifier included in the online service information, and connecting to the source to receive the online service, in response to a command selecting the online service from the channel list.

The online service information may further include an alternative LCN for the online service, and generating the channel list may include including the online service in the list at a position corresponding to the alternative LCN if another service is already using the LCN of the online service, the another service being another online service or one of the broadcast services.

If the online service information identifies a plurality of online services receivable having the same LCN, the method may further include selecting one of the plurality of online services to be included in the list at a position corresponding to that LCN based on a user selection.

The online service information may include online service identification information for identifying the online service, and the method may further include receiving broadcast service identification information through the broadcast stream for identifying each of the plurality of services, comparing the online service identification information to the broadcast service identification information, and determining that the online service is also available as one of the broadcast services through the broadcast stream if a match is found.

The apparatus may be a digital video broadcasting DVB receiver and the online service identification information and broadcast service identification information may include DVB triplet information, the DVB triplet information including a transport stream identifier TSID, an original network identifier ONID, and a service identifier SID.

The online service information may include preferred source information indicating which one of the broadcast stream and the network is the preferred source for the online service, and if it is determined that the online service is also available in the broadcast stream and if the preferred source information indicates that the network is the preferred source, generating the channel list may include including the online service in the channel list at a position corresponding to the LCN assigned to the same service receivable through the broadcast stream.

Generating the channel list may include including the same service receivable through the broadcast stream at a position corresponding to an unused LCN in the channel list.

If it is determined that the online service is also available in the broadcast stream, the method may further include combining content from the online service received through the network connection with content from the same service received through the broadcast stream, and presenting the combined content to a user.

The online service information may include a second source identifier for identifying a source from which an application related to the online service can be received by the network communication module.

The method may further include determining whether the online service information includes the LCN of the online service, and assigning one of a plurality of unused LCNs to the online service if the LCN is not included in the online service information, wherein generating the channel list may include generating the channel list based on the LCN assigned to the online service.

According to an aspect of another exemplary embodiment, there is provided a method to receive a broadcast stream including a plurality of broadcast services and a logical channel number (LCN) for each one of the broadcast services, and further arranged to receive an online service through a network communication module, the method including: receiving information defining a network location through the broadcast stream; and controlling the network communication module to connect to the network location to receive online service information identifying the online service, wherein if the online service information includes an LCN of the online service, the method further includes generating a channel list based on the LCNs of the plurality of broadcast services and the received LCN of the online service, and wherein if the online service information does not include an LCN of the online service, the method further includes assigning one of a plurality of unused LCNs to the online service and generating the channel list based on the LCNs of the plurality of broadcast services and the LCN assigned to the online service.

According to an aspect of another exemplary embodiment, there is provided a computer-readable storage medium storing a computer program which, when executed by an apparatus arranged to receive a plurality of broadcast services through a broadcast stream and an online service through a network communication module, causes the apparatus to perform the method.

### BRIEF DESCRIPTION OF THE DRAWINGS

Exemplary embodiments will now be described, by way of example only, with reference to the accompanying drawings, in which:

FIG. 1 illustrates an apparatus for receiving broadcast services and online services, according to an exemplary embodiment;

FIG. 2 illustrates a system for providing broadcast and online services to a receiver, according to an exemplary embodiment;

FIG. 3 illustrates generating a combined channel list based on logical channel numbers of broadcast and online services, according to an exemplary embodiment;

FIG. 4 illustrates an online service description table (OSDT) according to an exemplary embodiment;

FIG. 5 illustrates a network information table (NIT) according to an exemplary embodiment;

FIG. 6 illustrates a service description table (SDT) according to an exemplary embodiment;

FIG. 7 illustrates a method of generating a channel list including broadcast and online services, according to an exemplary embodiment; and

FIG. 8 illustrates a method of generating a channel list including broadcast and online services, according to another exemplary embodiment.

### DETAILED DESCRIPTION OF EXEMPLARY EMBODIMENTS

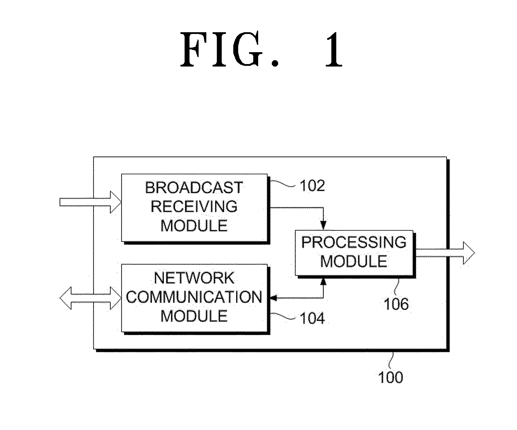

Referring now to FIG. 1, an apparatus 100 for receiving broadcast services and online services is illustrated according to an exemplary embodiment. In the present exemplary embodiment, the apparatus 100 is a Digital Video Broadcasting (DVB) receiver, i.e., a receiver that is compliant with a version of a DVB standard, for example, the European Telecommunications Standards Institute technical specification ETSI TS 300 468. However, exemplary embodiments can also be applied to other standards and systems. For example, the Open IPTV Forum (OIPF) standard, Digital Entertainment Content Ecosystem (DECE) standard, Advance Televisions Systems Committee (ATSC) standard, Integrated Services Digital Broadcasting (ISDB) standard, etc., may be used instead of or in addition to the DVB standard.

The apparatus 100 includes a broadcast receiving module 102 (e.g., broadcast receiver) which receives a broadcast stream, a network communication module 104 (e.g., network communicator) which communicates with a network via a network connection, and a processing module 106 (e.g., processor) which processes information received by the broadcast receiving module 102 and network communication module 104 and sends audio-visual (AV) data to a display. The broadcast receiving module 102 can be an antenna configured to receive the broadcast stream. The network communication module 104 (e.g., a wireless network card or terminal, an Ethernet port, etc.) can be configured to communicate with the network over any type of network connection, for example a wireless (WiFi) connection, an Ethernet connection, a broadband connection, an ISDN link, and so on. The processing module 106 could be implemented as one or more software modules executed on a processor, or could be separate hardware modules, for example, implementing on a field-programmable gate array (FPGA) or application-specific integrated circuit (ASIC).

In general, the particular structure of the processing module 106 is not limited so long as the desired operability is provided. Additionally, although certain operations are hereinafter described as being performed by the processing module 106, in other exemplary embodiments, some of the operations can be provided by other elements within the apparatus 100. For example, the broadcast receiving module 102 may perform some of the processing for information received through the broadcast stream, and similarly the network communications module 104 may perform some of the processing for information sent or received via a network connection.

In more detail, in the present exemplary embodiment, the processing module 106 is arranged to obtain information about a plurality of broadcast services that are available through the broadcast stream. This information will hereinafter be referred to as broadcast service information, and includes for each broadcast service a Logical Channel Number (LCN) for that service. Since in the present exemplary embodiment the apparatus 100 is a DVB receiver, the broadcast service information is provided as a Service Description Table (SDT). However, it is understood that in other exemplary embodiments which use a different standard, the broadcast service information may be received in a different format appropriate to or compatible with that standard.

In addition to the broadcast service information received through the broadcast stream, the broadcast stream receiving module 102 also receives information defining a network location through the broadcast stream, e.g., in the form of a Uniform Resource Locator (URL). In the present exemplary embodiment, the URL is included in an additional descriptor in the Network Information Table (NIT) received through the broadcast stream. In other exemplary embodiments where standards other than DVB are used, a different method of providing information about the network location may be used.

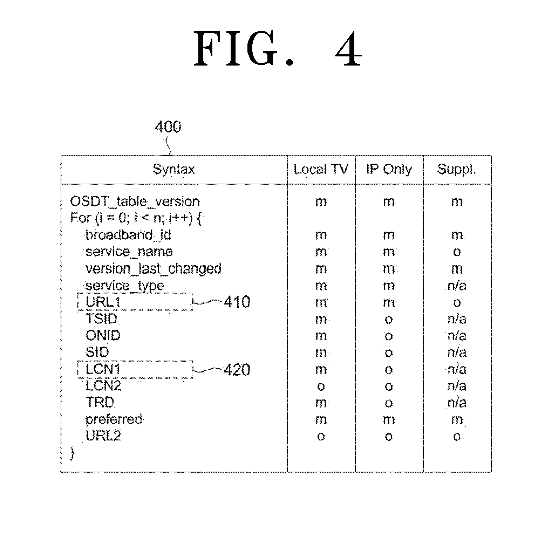

The apparatus 100 controls the network communication module 104 to connect to the network location to receive information about one or more online services that are receivable from the network through the network connection. The information about an online service will hereinafter be referred to as online service information, and includes an LCN for each online service receivable through the network connection. In the present exemplary embodiment, the online service information is received as an Online Service Description Table (OSDT), the format of which will be described below with reference to FIG. 4. Each online service can, for example, be a TV service similar to a program received in a related art manner through the broadcast stream. Such an online service could be distributed over the network in real-time similar to a related art TV broadcast, or could be supplied 'on-demand' to provide a catch-up service. The online service may be the same service, i.e., may carry the same programming, as one of the broadcast services. In this case the same service may be available through both the broadcast stream and the network connection, depending on whether or not the receiver is currently located in an area where the broadcast version of the service can be received. On the other hand, an online service could be an "IP-only" service for which there is no corresponding instance of the service in the broadcast stream. Alternatively, an online service could be an application associated with another service, to be executed by the receiver or a device connected to the receiver.

After receiving the LCNs of the broadcast services and any online services, the processing module 106 is arranged to generate a channel list based on the LCNs. Specifically, the generated channel list includes the plurality of broadcast services and the one or more online services, ordered according to the LCNs. Therefore the online services can be seamlessly integrated into the broadcast channel list, because the receiver is able to receive LCNs for the online services from the specified network location. The position of an online service in the channel list is determined by the LCN. Exemplary embodiments therefore allow online services to appear in the channel list entirely as they would if the online services were being received via the antenna, i.e., the broadcast services and online services may be indistinguishable to a user from viewing the channel list. Therefore the user can access IP delivered services, or other content such as catch-up services or applications, via the normal channel list. This ensures that the online services are as prominent as broadcast services received in the related art manner.

Furthermore, by providing the online service information over the network instead of through the broadcast stream, the only additional information to be transmitted in the broadcast is the network location (e.g., the URL). Therefore, minimal additional data is added to the broadcast stream multiplex, where capacity is at a premium. The majority of the additional information to access the online services is obtained from the server which supplies the OSDT, i.e., the server whose location is specified by the URL.

The apparatus 100 may perform discovery of the online services and broadcast services during installation, initialization, on a predetermined schedule, according to a user input, etc., by receiving the broadcast service information and online service information to determine which services are available. Also, the apparatus 100 could be configured to periodically connect to the network location specified by the received URL, to receive updated OSDT information.

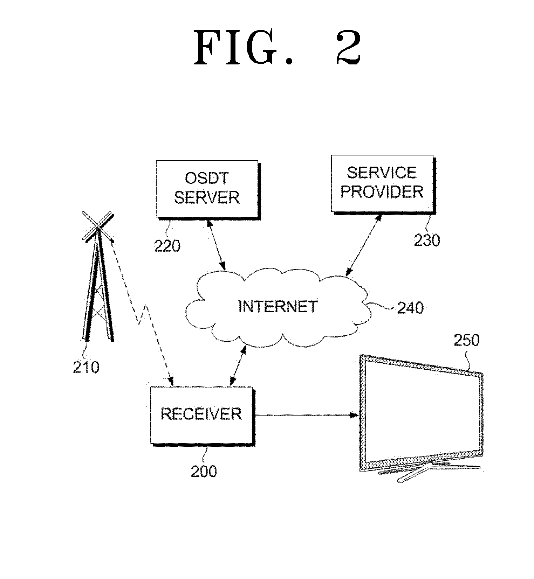

Referring now to FIG. 2, a system for providing broadcast and online services to a receiver 200 is illustrated according to an exemplary embodiment. The receiver 200 includes an apparatus similar to that shown in FIG. 1. The system includes a broadcast transmitter 210 for transmitting the broadcast stream to the receiver 200, an OSDT server 220 for providing the online service information in the form of an OSDT, and an online service provider 230 for providing the actual online service. The receiver 200 is able to communicate with the OSDT server 220 and online service provider 230 over the Internet 240, although in general any suitable network may be used.

The receiver 200 operates in a similar manner to the apparatus described above with reference to FIG. 1. Specifically, the receiver 200 receives LCNs of the broadcast services through the broadcast stream, as well as a URL of the OSDT server 220. The receiver 200 connects to the OSDT server 220 using the received URL, and receives the OSDT including the LCNs of online services from the server 220. Then, the receiver 200 generates the channel list including both the broadcast services and the online services. A user can select to view the channel list on a display, for example, a television 250, connected to the receiver 200. It is understood that, in another exemplary embodiment, the display may be integrated with the receiver 200. If the user selects an online service from the list, the receiver 200 then connects to the service provider 230 to receive the selected online service via the Internet 240. Each online service may be provided by the same provider or by a different provider, i.e., there may be a plurality of service providers 230. The receiver 200 can identify the location of the appropriate service provider for a particular service based on a source identifier included in the OSDT.

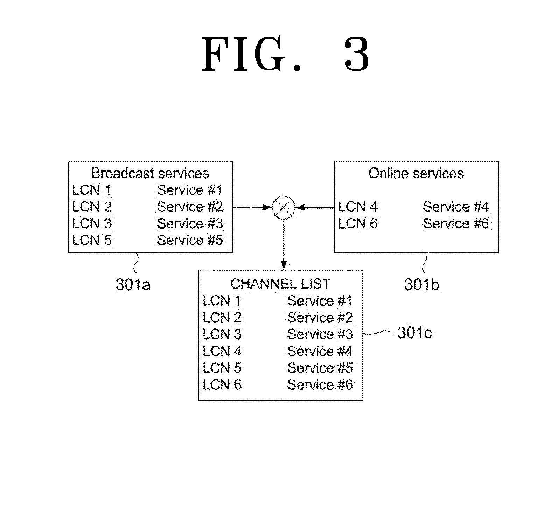

Referring now to FIG. 3, generating a combined channel list based on logical channel numbers of broadcast services and online services is illustrated according to an exemplary embodiment. In the present example, four broadcast services 301a and two online services 301b are defined, and each is assigned an LCN. The numbers in FIG. 3 are merely exemplary, and exemplary embodiments may be applicable to any number of broadcast services and any number of online services. Also, any LCN may in general be assigned to any service, i.e., any broadcast service or any online service. As shown in FIG. 3, in the present example, the broadcast services are allocated LCNs 1, 2, 3, and 5, whilst the online services are allocated LCNs 4 and 6. Therefore, when the combined channel list 301c is generated, the online services are positioned according to their LCNs and can be seamlessly integrated into the channel list. In the example shown in FIG. 3, the online services are displayed in the channel list in the same manner as the broadcast services, such that the different types of services are indistinguishable to a user viewing the list.

Referring now to FIG. 4, an online service description table (OSDT) is illustrated according to an exemplary embodiment. The OSDT includes the information that defines the network location, for example, a URL that identifies the location of a server from which an online service can be received. It is understood that in one or more other exemplary embodiments, the information may not be provided as a URL, and could be provided in any other format suitable for locating the OSDT server, for example, as an IP address.

Furthermore, although a particular format of the OSDT is illustrated in FIG. 4, other exemplary embodiments are not limited to this specific format. For instance, in the present exemplary embodiment, the OSDT is provided in a binary format similar to the DVB descriptors included in the broadcast stream. In another exemplary embodiment, however, extensible markup language (XML) could be used to format the OSDT information.

Referring to FIG. 4, the OSDT includes a plurality of fields, some of which may be optional and some of which may be mandatory. In FIG. 4, mandatory fields are denoted using the shorthand 'm', whilst optional fields are denoted using an 'o'. Also, a field that is not applicable to a particular type of service is denoted using the abbreviation 'n/a'. FIG. 4 shows which fields are mandatory and which are optional in the cases of online services that are also available as local TV broadcasts through the broadcast stream (the "Local TV" column), online services that do not have an equivalent service in the broadcast stream (the "IP Only" column), and supplementary services that are used to provide additional information and/or functionality in respect of another service (the "Suppl." column). Here, "local TV" refers to any service which is receivable through the broadcast stream at a current geographical location of the receiver.

The choice of whether each field is optional or mandatory for any given type of service may be made when the OSDT format is defined, and is not limited to the example shown in FIG. 4. That is, FIG. 4 provides an example of types of information that can be included in the online service information. The actual content of the online service information can be modified according to a particular operating environment and use-case for which the receiver is intended. FIG. 4 illustrates an example of the online service information for three use-cases, specifically the online provision of broadcast services, IP-only services, and supplementary content, although it is understood that exemplary embodiments can also be applicable to other use-cases. Similarly, although FIG. 4 illustrates examples of information that can be included in the online service information for a DVB system, in other broadcasting environments (i.e., other than DVB), different information may be provided, e.g., DVB-specific information such as the DVB triplet could be omitted.

As described above, the OSDT includes a source identifier 410 in the form of a URL for each service. The source identifier can be used by the receiver to identify a source from which the online service can be obtained. The OSDT also includes an LCN 420 for the online service to enable the online service to be placed in the correct position in the channel list. In addition, the OSDT contains a number of other fields to provide additional information about the online service. The purpose of each field in the OSDT will now be described. In some exemplary embodiments, certain fields may be omitted and/or other fields added, e.g., depending on the particular information that is used by the receiver in that exemplary embodiment.

*OSDT_table_version*: this field holds a version number to enable a receiver to detect that something in the rest of the table has changed. This version number can also be carried in the descriptor in the first loop of the broadcast NIT which carries the URL of the OSDT server, enabling the receiver to detect a table update without accessing the Internet.

*broadband_id*: this identifier enables a service that has already been inserted into the channel list to be tracked, e.g., removed if desired. In a related art, broadcast services can be identified based on DVB triplet information for that service. The broadband_id therefore enables the online service to be identified and tracked even if no DVB triplet information is available for the service.

*service_name*: this is the service name as it would normally appear in the service descriptor of a related art broadcast SDT. If the service is one which also appears in the broadcast stream then this field may be the same as the service name in the corresponding broadcast SDT.

*version_last_changed*: this is the version of the table indicating that this entry, i.e., this service, changed in some way. This enables the receiver to detect which entries have changed since this table was last processed. The receiver can store the version of the table when the OSDT is processed, and when processing a subsequent version of the OSDT, any entry which has a value of version_last_changed that is later than the stored version number can be identified and processed, whilst the rest of the entries can be skipped.

*service_type*: this is a related art DVB service type used to identify the type of service, e.g., standard definition (SD) or high definition (HD). This may be used to determine if the service can be displayed by the receiver.

*URL1*: this is the source identifier in the form of a URL that points to a means, a method, or a server for accessing the content. For example, the URL this could point to a Content Access Streaming Descriptor (CASD), as defined by OIPF, which would then locate the content.

*TSID*: this is the DVB transport stream ID of the service as broadcast. As shown in FIG. 4, this can be mandatory if the service is also available through the broadcast stream, to allow this part of the DVB triplet to be compared with the list of broadcast services in the channel list to determine if this service has already been discovered.

*ONID*: this is the DVB original network ID of the service as broadcast. As shown in FIG. 4, this can be mandatory if the service is also available through the broadcast stream, to allow this part of the DVB triplet to be compared with the list of broadcast services in the channel list to determine if this service has already been discovered.

*SID*: this is the DVB service ID as broadcast. As shown in FIG. 4, this can be mandatory if the service is also available through the broadcast stream, to allow this part of the DVB triplet to be compared with the list of broadcast services in the channel list to determine if this service has already been discovered.

*LCN1*: this is the LCN of the service that can be used by the receiver to determine where to place the service in the channel list.

*LCN2:* this is an alternative LCN for the service. The alternative LCN can be used to place other local TV services in a predefined location. In an exemplary embodiment, this LCN must be unique within this list and the current network.

*TRD*: this is a related art DVB target region descriptor to be used to select between multiple regional or local services which have the same LCN1 for which to locate at this position. That is, if multiple online services are available which have the same LCN1, the service which is indicated by the TRD as the local service for the current location is placed at the position corresponding to LCN1 in the channel list. The other services can be placed at positions corresponding to their LCN2 numbers.

*preferred*: this field can be used to indicate which source, i.e., broadcast (if receivable) or IP, should be preferred for this particular service. This field can take three values: broadcast service preferred (if receivable); IP service preferred; and IP-broadcast content to be combined in some way with the broadcast content. For example, the IP and broadcast content may be combined when the online service is used to provide supplementary content to a broadcast service.

*URL2*: this is an optional additional URL that can indicate the location of a server for providing an application associated with the service. For example, URL2 may point to an Extended Application Information Table (XAIT) which locates the application. This URL may be used for services that are only accessible via the broadcast, in which case *URL1* may be empty and *preferred* may be set to broadcast.

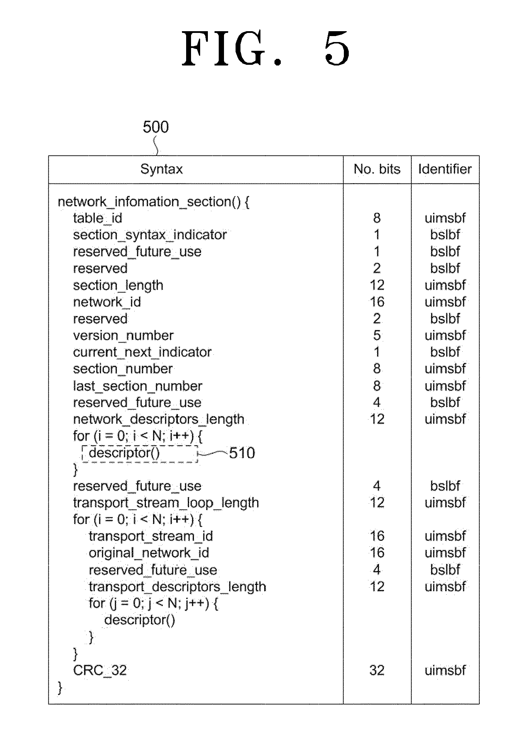

Referring now to FIG. 5, a DVB Network Information Table (NIT) is illustrated according to an exemplary embodiment. The structure of the NIT is defined in ETSI TS 300 468, and as such a detailed description will be omitted herein for the sake of brevity. FIG. 5 illustrates the number of bits assigned to each field, and whether a particular field is transmitted as an unsigned integer with the most significant bit first (UIMSBF) or as a bit string, left bit first (BSLBF). As shown in FIG. 5, the NIT 500 contains two 'loops'. The first loop 510 contains all the descriptors which have the scope of the network. In the present exemplary embodiment, an additional descriptor is added to this first loop in the NIT, to contain the URL of the OSDT server, i.e., the network location from which the online service information can be obtained. Therefore, when a receiver such as the one shown in FIG. 1 or 2 receives and processes the NIT of FIG. 5, the receiver can obtain the URL from the additional descriptor in the first loop and connect to the URL to receive the OSDT. In some exemplary embodiments, the same URL can be used in all NITs throughout the country, i.e., in the NIT for each region. However, in other exemplary embodiments, the URL could be different for each network, such that a different OSDT server can be used in different networks. This would enable different OSDTs to be provided to different areas.

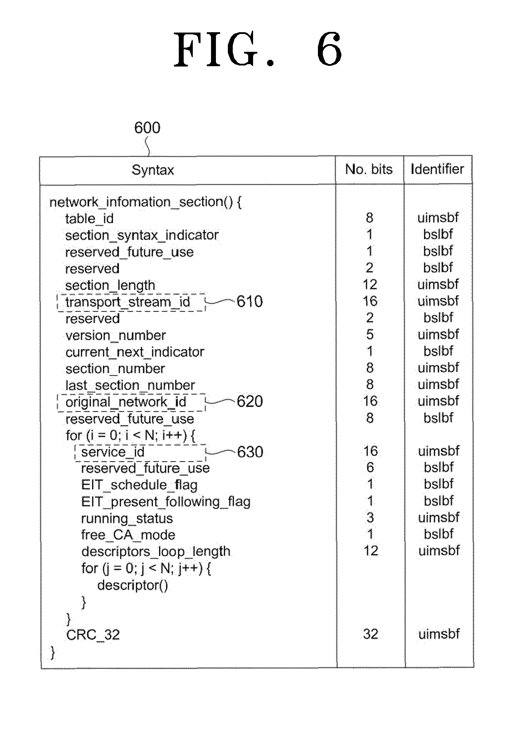

Referring now to FIG. 6, a Service Description Table (SDT) is illustrated for use in an exemplary embodiment. The SDT is also defined in ETSI TS 300 468, and so will not be described in detail here. As shown in FIG. 6, the SDT 600 includes a transport_stream_id (TSID) field 610, an original_network_id (ONID) field 620, and a service_id (SID) field 630. Together, the TSID, ONID and SID are referred to as the DVB triplet, and can be used to uniquely identify any given service in the broadcast stream. Specifically, the SDT 600 has a loop with an entry for each service in the broadcast stream, the service_id 630 being included in the loop such that a unique ID can be provided for each service.

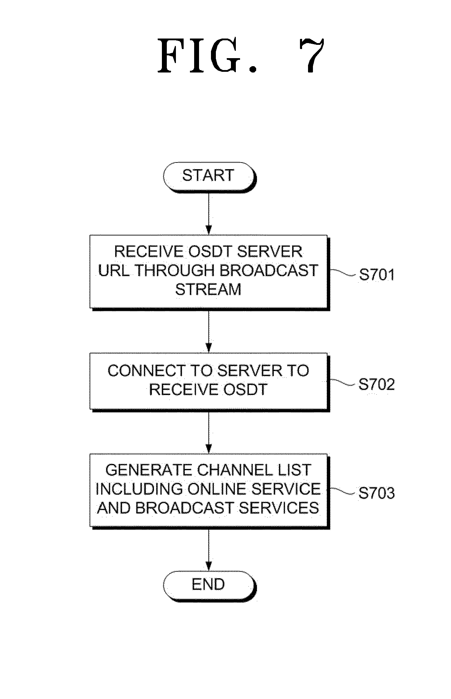

Referring now to FIG. 7, a method of generating a channel list including broadcast and online services is illustrated according to an exemplary embodiment. The method is suitable for use in an apparatus such as that shown in FIG. 1, and could for example be implemented using a computer program executed by the processing module 106. First, in operation S701, the apparatus receives information defining a network location through the broadcast stream. In the present exemplary embodiment, the method is for use in a DVB receiver and the information is received as a URL contained in a descriptor of the received NIT, but other arrangements are also possible. Then, in operation S702, the apparatus connects to the server identified by the URL, for example the OSDT server 220 of FIG. 2, to receive the online service information including an LCN of an online service receivable through the network connection. Here, the online service information is received as an OSDT similar to the one shown in FIG. 4. Then, in operation S703, the apparatus generates a channel list based on the LCNs of the plurality of services receivable through the broadcast stream and the LCN of the online service. As described above with reference to FIG. 3, the channel list can be generated by including each one of the online and broadcast services in the list at a position determined by the LCN assigned to that particular service. The method therefore allows online services to be integrated into the normal broadcast channel list, without having to provide a separate means for accessing the online services. That is, the user can access both online services and broadcast services in the same manner, by selecting the desired service from the channel list.

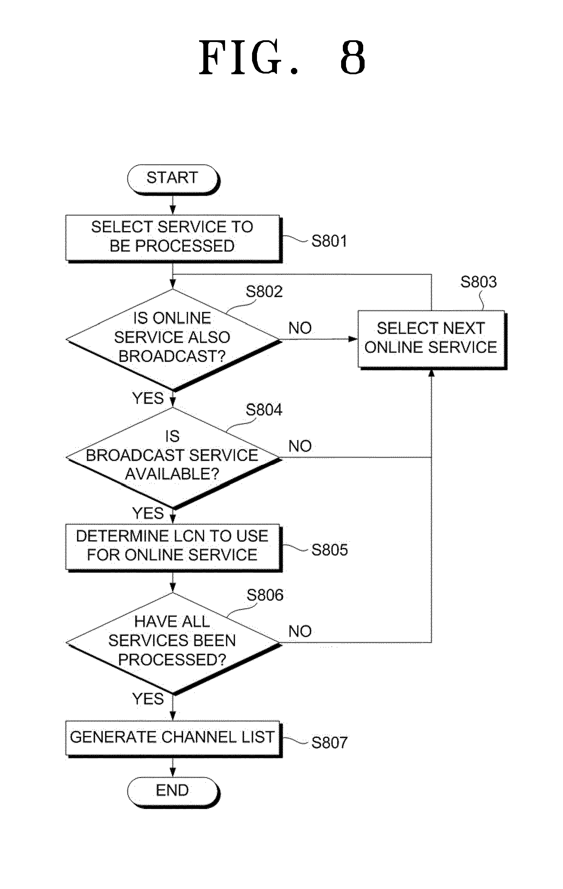

An example will now be described of a method of generating a channel list including broadcast and online services, according to another exemplary embodiment. The method is illustrated in FIG. 8, and can be used to determine whether an online service is also receivable through the broadcast stream, and if so, which LCN to use for the online service. The method can be performed once the online service information, e.g., the OSDT, has been received.

First, in operation S801, a first online service in the OSDT is selected. Here, "selecting" the service does not refer to connecting to the service provider to receive the service, but instead simply refers to choosing the first service to be processed when the services are processed sequentially. Then, in operation S802, it is checked whether the online service is also a service which is broadcast. When the online service information is supplied in the format shown in FIG. 4, this can be determined by checking whether the DVB triplet information is present. As IP-only services are by definition never broadcast, there is no reason to have an allocated DVB triplet, or part of a triplet. Therefore the DVB triplet information may be omitted for IP-only services. However, if the online service is also broadcast (e.g., the "local TV" column in FIG. 4), the DVB triplet information will be present in the OSDT. Therefore in operation S802, if the DVB triplet information is present for the online service, then it is determined that the service is also broadcast. If the online service is not broadcast, i.e., if the service is IP-only, then the apparatus proceeds to operation S803 and selects the next online service identified in the OSDT to be processed, before returning to operation S802 for the newly-selected service.

In some exemplary embodiments, it may be that a plurality of IP-only services are available which all share the same LCN. For example, this may be the case for IP-only services which are intended to provide local services. In this case, the receiver can determine which is the current "local" service based on the TRD field and a known location of the receiver, e.g., a known location input during installation of the receiver, or if the location is not already known, the user may be requested to select which service to use as the local service. The online service indicated as the local service by the TRD field is included in the list at the channel number indicated in the LCN1 field, and the other channels are included at positions corresponding to their alternative LCN2 numbers.

Referring back to FIG. 8, if at operation S802 it is determined that the online service is also broadcast, for example is a "local TV" service as shown in FIG. 3, then in operation S804, it is determined whether the broadcast version of the service is currently available. Specifically, the receiver compares the DVB triplet information (TSID, ONID and SID) with DVB triplet information for each broadcast service that is currently receivable, i.e., that can be received at the current location of the receiver. This can be done by comparing the DVB triplet information of the online service with the DVB triplet information in the SDT received through the broadcast stream. This step is carried out because even though an online service may also be broadcast, this does not necessarily mean that the broadcast instance of the service can actually be received at the current location.

If the corresponding broadcast service is not currently available, the online service can be included in the list at the channel number indicated by LCN1 because no other source is available, and so the method proceeds to operation S803 and selects the next online service to be processed. However, if the broadcast service is currently available, then both the online service and the broadcast service will share the same LCN. In this case, in operation S805, the receiver determines which one of the services, i.e., online or broadcast, should be entered in the list at that LCN. In the present exemplary embodiment, this decision is made based on the "preferred" entry in the OSDT. If the information indicates that the online service is preferred, then the receiver includes the online service at the channel number indicated by LCN1 and moves the broadcast service to another channel number, for example, the number indicated by LCN2 or any other unused channel number.

On the other hand, if the "preferred" field indicates that the broadcast service is preferred, the broadcast service remains at the designated LCN and the online service is moved to another LCN, for example, the alternative channel number indicated by LCN2. Alternatively, if the "preferred" field indicates that the services should be combined, the combined service can be included in the list at the originally-assigned LCN.

Once it has been determined which LCN to use for that online service, the receiver checks in operation S806 whether all online services have been processed, i.e., whether the above-described checks have been carried out for all services mentioned in the received OSDT. If any services remain to be processed, the receiver returns to operation S803 and selects the next service. If, however, all online services have been processed, then in operation S807, the channel list is generated based on the LCNs. That is, the channel list is generated by adding each online service to the channel list at the position indicated by LCN1, or if it was determined in operation S805 to move that service to another channel number, adding the service to the channel list at the alternative position, for example LCN2 or another unused channel number. Although in the present exemplary embodiment the channel list is generated after processing all online services from the OSDT, in other exemplary embodiments the channel list may be built up step-by-step while the services are processed, i.e., by adding each service to the list as soon as the LCN for that service has been determined.

A method such as the one shown in FIG. 8 may be executed when the receiver first obtains the OSDT from the OSDT server. Afterwards, if the receiver subsequently obtains an updated OSDT from the same or a different server, the receiver can update the existing channel list by comparing the broadband_id of each online service in the new OSDT against any service already in the channel list that has a broadband_id. If a match is found, it is determined that the online service was already present in the previous list, and the receiver can then check the updated LCN with the previously-assigned LCN to determine whether it is necessary to reposition the service in the channel list.

Although exemplary embodiments have been described in which an OSDT and online services are received through the same network connection, in other exemplary embodiments this need not be the case. For example, the OSDT could be received over a telephone line via a modem, and the online services could be received over a broadband connection via a router.

Furthermore, exemplary embodiments have been described in relation to receiving an online service. The online service could be programming similar to broadcast programs receivable in a related art manner, or could be another type of content such as an application relating to one of the broadcast services or ancillary information such as data to enable a broadcast service in a two-dimensional (2D) format to be converted to a three-dimensional (3D) format.

The operating method of the apparatus according to various exemplary embodiments may be embodied as a program and be provided to the apparatus for receiving a broadcast stream.

For example, as a method which is arranged to receive a broadcast stream including a plurality of broadcast services and a logical channel number LCN for each one of the broadcast services, and further arranged to receive an online service through a network communication module, there may be provided a non-transitory computer readable medium which stores a program including receiving information defining a network location through the broadcast stream, connecting to the network location to receive online service information including the LCN of the online service, and generating a channel list based on the LCNs of the broadcast services and the LCN of the online service.

A non-transitory computer readable medium is a medium readable by an apparatus and which stores data semi-permanently, unlike a medium which stores data for a short period of time such as a resistor, cache, and memory etc. More specifically, the aforementioned various applications or programs may be stored and provided in a non-transitory computer readable medium such as a CD, DVD, hard disk, Blu-ray disk, USB, memory card, and ROM. Whilst certain exemplary embodiments have been described above, the skilled person will appreciate that many variations and modifications are possible without departing from the scope of the invention as defined in the accompanying claims.

## Claims

1. An apparatus, comprising:
a broadcast receiving module arranged to receive a broadcast stream including a plurality of broadcast services, and a plurality of logical channel numbers (LCNs) for the plurality of broadcast services; and
a network communication module for communicating with a network,
wherein the apparatus is arranged to receive information defining a network location through the received broadcast stream, control the network communication module to connect to the defined network location to receive online service information including an LCN of an online service receivable by the network communication module, and generate a channel list based on the plurality of LCNs of the plurality of broadcast services and the LCN of the online service.

2. The apparatus of claim 1, wherein the received online service information includes a source identifier for identifying a source from which the online service is receivable, the apparatus being arranged to respond to a command selecting the online service from the generated channel list by connecting to the source to receive the online service.

3. The apparatus of claim 1 or 2, wherein the online service information further includes an alternative LCN for the online service, the apparatus being arranged to include the online service in the channel list at a position corresponding to the alternative LCN if another service is already using the LCN of the online service, the another service being another online service or one of the broadcast services.

4. The apparatus of claim 1, 2 or 3, wherein if the online service information identifies a plurality of receivable online services having a same LCN, the apparatus is arranged to select one of the plurality of online services to be included in the channel list at a position corresponding to the same LCN based on a user selection.

5. The apparatus of any one of the preceding claims, wherein:
the received online service information includes online service identification information for identifying the online service, and the apparatus is arranged to receive broadcast service identification information through the received broadcast stream for identifying each of the plurality of broadcast services; and
wherein the apparatus is arranged to compare the online service identification information to the broadcast service identification information and determine that the online service is also available as one of the broadcast services through the received broadcast stream if a match is found.

6. The apparatus of claim 5, wherein the apparatus is a digital video broadcasting (DVB) receiver and the online service identification information and broadcast service identification information comprise DVB triplet information, the DVB triplet information including a transport stream identifier TSID, an original network identifier ONID, and a service identifier SID.

7. The apparatus of claim 5 or 6, wherein:
the received online service information includes preferred source information indicating which one of the broadcast stream and the network is a preferred source for the online service; and
wherein if it is determined that the online service is also available in the broadcast stream and if the preferred source information indicates that the network is the preferred source, the apparatus is arranged to include the online service in the channel list at a position corresponding to the LCN assigned to the same service receivable through the broadcast stream.

8. The apparatus of claim 7, wherein the apparatus is further arranged to include the same service receivable through the broadcast stream at a position corresponding to an unused LCN in the channel list.

9. The apparatus of any one of claims 5 to 8, wherein if it is determined that the online service is also available in the broadcast stream, the apparatus is arranged to combine content from the online service received through the network connection with content from the same service received through the broadcast stream, and present the combined content to a user.

10. The apparatus of any one of the preceding claims, wherein the received online service information includes a second source identifier for identifying a source from which an application related to the online service is receivable by the network communication module.

11. The apparatus of any one of the preceding claims, wherein the apparatus is arranged to determine whether the received online service information includes the LCN of the online service, assign one of a plurality of unused LCNs to the online service if the LCN is not included in the received online service information, and generate the channel list based on the LCN assigned to the online service.

12. The apparatus of any one of the preceding claims, wherein the apparatus is a digital video broadcasting (DVB) receiver and is arranged to identify the network location based on information included in a network information table (NIT) received through the broadcast stream.

13. A method for use in apparatus arranged to receive a broadcast stream including a plurality of broadcast services and a plurality of logical channel numbers (LCNs) for the plurality of broadcast services, and further arranged to receive an online service through a network communication module, the method comprising:
receiving information defining a network location through the received broadcast stream;
connecting to the defined network location to receive online service information including an LCN of the online service; and
generating a channel list based on the plurality of LCNs of the plurality of broadcast services and the LCN of the online service.

14. The method of claim 13, further comprising:
identifying a source from which the online service is receivable, based on a source identifier included in the received online service information; and
connecting to the identified source to receive the online service, in response to a command selecting the online service from the generated channel list.

15. The method of claim 13 or 14, wherein the received online service information includes online service identification information for identifying the online service, and the method further comprising:
receiving broadcast service identification information through the broadcast stream for identifying each of the plurality of services;
comparing the online service identification information to the broadcast service identification information; and
determining that the online service is also available as one of the broadcast services through the broadcast stream if a match is found.
